# EUROPÄISCHE PATENTANMELDUNG

(11) **EP 2 853 841 A1**
(43) Veröffentlichungstag der Anmeldung: **01.04.2015**
(21) Anmeldenummer: 14179665.6
(22) Anmeldetag: 04.08.2014
(51) Int. Cl.: F25B 1/00, B29C 49/42, B29C 49/28

(54) **Verfahren zur Kühlung von Bauelementen einer Blasformmaschine und/oder einer Getränkeabfüllmaschine**

(30) Priorität: 02.08.2013 DE 102013108366
(71) Anmelder: Krones AG, 93073 Neutraubling (DE)
(72) Erfinder: Erhart, Georg, 93073 Neutraubling (DE); Roithmeier, Stefan, 93073 Neutraubling (DE)
(74) Vertreter: Bittner, Bernhard

(57) **Zusammenfassung**

Die Erfindung betrifft ein Verfahren zur Kühlung von sich während eines Blasformprozesses und/oder eines Getränkeherstellungsprozesses erwärmenden Bauelementen einer Behälterproduktionsanlage und/oder einer Getränkeabfüllmaschine mittels zumindest einer Kälteanlage, wobei die Kälteanlage mit einem Verdampfer, einem Verflüssiger, und einem Gasbereich, der sich zwischen dem Verdampfer und dem Verflüssiger erstreckt und ausgebildet ist, gebildet ist, um von dem Verdampfer verdampftes Arbeitsfluid zu dem Verflüssiger zu leiten, sodass das verdampfte Arbeitsfluid, welches ein umweltfreundliches Fluid ist, welches in eine Umgebung der Blasformmaschine und/oder der Getränkeabfüllmaschine ohne eine Verursachung von Umweltschädigungen abgebbar ist, in dem Verflüssiger verflüssigt wird.

## Beschreibung

Die vorliegende Erfindung betrifft ein Verfahren zur Kühlung von sich während eines Blasformprozesses und/oder eines Getränkeherstellungsprozesses erwärmenden Bauelementen einer Behälterproduktionsanlage und/oder einer Getränkeabfüllmaschine gemäß dem Oberbegriff des Patentanspruchs 1. Ferner betrifft die vorliegende Erfindung eine Kälteanlage zur Kühlung von sich während eines Blasformprozesses und/oder eines Getränkeherstellungsprozesses erwärmenden Bauelementen einer Behälterproduktionsanlage und/oder einer Getränkeabfüllanlage gemäß dem Oberbegriff des Patentanspruchs 12 sowie eine Behälterproduktionsanlage und eine Getränkeabfüllmaschine gemäß den Oberbegriffen der Patentansprüche 13 und 14.

Es sind aus dem Stand der Technik Kälteanlagen, welche zur Kühlung von beispielsweise Blasformen verwendet werden, bekannt, welche auf eine Verdampfung von zumindest weitgehend umweltschädlichen bzw. personengefährdenden Kältemitteln beruhen. Beispielsweise handelt es sich bei derartigen Kältemitteln um Arbeitsfluide, welche einen Flurkohlenwasserstoff (FCKW) enthalten oder bei Verdampfung einen FCKW entwickeln oder es handelt sich um ein Ammoniak. Zwar sind derartige Kälteanlagen zur Kühlung der obig beschriebenen Blasformen besonders kostengünstig einbaubar und/oder in Betrieb nehmbar, jedoch weisen derartige auf umweltschädlichen Arbeitsfluiden basierende Kälteanlagen einen verhältnismäßig geringen elektrischen Wirkungsgrad auf.

Andererseits sind bereits Wärmepumpen bekannt, welche als Arbeitsfluid umwelt- bzw. personenunschädlich, das heißt umweltfreundlich, sind. Beispielsweise sind derartige Arbeitsfluide biologisch abbaubar. Derartige Wärmepumpen finden beispielsweise Verwendung als Erdwärmeheizsysteme für Häuser, bei denen es sich bei dem Arbeitsfluid beispielsweise auch um Wasser handeln kann. Solche Wärmepumpen sind auch ohne Probleme in beispielsweise Einfamilienhäusern unterbringbar, da dort, insbesondere im Kellerbereich, genügend Platz zur Montage derartiger auf Wasser basierender Wärmepumpen zur Verfügung steht. Derartige Wärmepumpen können jedoch bisher nicht, beispielsweise auch aufgrund ihres Platzbedarfs und/oder wegen ihrer sonstigen strukturellen Ausgestaltungen, zur Kühlung während eines Blasformprozessen und/oder eines Getränkeherstellungsprozesses Verwendung finden.

Es ist daher eine Aufgabe der vorliegenden Erfindung, ein Verfahren zur Kühlung von sich während eines Blasformprozesses und/oder eines Getränkeherstellungsprozesses erwärmenden Bauelementen anzugeben, welches sowohl einen hohen elektrischen Wirkungsgrad aufweist, als auch umweltfreundlich ist und daher beispielsweise einen Bediener der Kälteanlage gesundheitlich nicht beeinträchtigt.

Diese Aufgabe wird durch den Patentanspruch 1 gelöst. Vorteilhafte Ausführungsformen sind in den abhängigen Ansprüchen beschrieben.

Das hier beanspruchte Verfahren zur Kühlung nutzt zumindest eine Kälteanlage aus, wobei die Kälteanlage mit einem Verdampfer, einem Verflüssiger und einem Gasbereich, der sich zwischen dem Verdampfer und dem Verflüssiger erstreckt und ausgebildet ist, gebildet ist, um von dem Verdampfer verdampftes Arbeitsfluid zu dem Verflüssiger zu leiten, so dass das verdampfte Arbeitsfluid in dem Verflüssiger verflüssigt wird.

Um nun ein Verfahren zur Kühlung von sich während eines Blasformprozesses und/oder eines Getränkeherstellungsprozesses erwärmenden Bauelementen anzugeben, welches sowohl einen hohen elektrischen Wirkungsgrad aufweist, als auch umweltfreundlich ist, macht die vorliegende Erfindung unter anderem von der Idee Gebrauch, als Arbeitsfluid ein umweltfreundliches Fluid zu verwenden, welches in eine Umgebung der Blasformmaschine und/oder der Getränkeabfüllmaschine ohne eine Verursachung von Umweltschädigungen abgebbar ist. Dabei umfassen "Umweltschädigungen" alle Schädigungen, welche an einer Person und/oder einer Umgebung der Blasformmaschine und/oder Getränkeabfüllmaschine entstehen können. Insbesondere kann es sich bei Umweltschädigungen um irreversible Schädigungen handeln.

Gemäß zumindest einer Ausführungsform umfasst das Verfahren zur Kühlung von sich während eines Blasformprozesses und/oder eines Getränkeherstellungsprozesses erwärmenden Bauelementen einer Behälterproduktionsanlage und/oder einer Getränkeabfüllmaschine zumindest eine Kälteanlage, wobei die Kälteanlage mit einem Verdampfer, einem Verflüssiger und einem Gasbereich, der sich zwischen dem Verdampfer und dem Verflüssiger erstreckt und ausgebildet ist, gebildet ist, um von dem Verdampfer verdampftes Arbeitsfluid zu dem Verflüssiger zu leiten, sodass das verdampfte Arbeitsfluid in dem Verflüssiger verflüssigt wird. Dabei handelt es sich bei dem Arbeitsfluid um ein umweltfreundliches Fluid, welches in eine Umgebung der Blasformmaschine und/oder der Getränkeabfüllmaschine ohne eine Verursachung von Umweltschädigungen abgebbar ist.

Gemäß zumindest einer Ausführungsform ist das verdampfte Arbeitsfluid frei von Fluorkohlenwasserstoffen (FCKW). Zwar schädigen derartige Fluorkohlenwasserstoffe nicht unmittelbar die Umwelt, jedoch haben derartige Fluorkohlenwasserstoffe, wenn sie in die Atmosphäre der Erde entlassen werden, auf diese eine physikalische und/oder chemische invasive Einwirkung, beispielsweise auf Gas- und Ozonschichten der Erde, so dass mittels der Vermeidung von Fluorkohlenwasserstoffen im Arbeitsfluid vermieden wird, dass nach deren Freisetzung in die Umwelt diese atmosphärische Verschiebungen und/oder Störungen verursachen.

Gemäß zumindest einer Ausführungsform ist die Kälteanlage in die Behälterproduktionsanlage und/oder die Getränkeabfüllmaschine vollständig integriert. Das heißt, dass die Kälteanlage in einer derartigen Ausführungsform ein zumindest teilweise innerhalb der Behälterproduktionsanlage und/oder der Getränkeabfüllmaschine verbauter Bestandteil ist. Insofern ist gewährleistet, dass ein besonders kompaktes, zeitsparendes und kostengünstiges Verfahren zur Kühlung angeboten wird, bei dem die Kälteanlage zusammen mit der Behälterproduktionsanlage und/oder der Getränkeabfüllmaschine beispielsweise besonders mobil aufgestellt und dann in Betrieb genommen werden kann. Eine derartige Kälteanlage ist daher nicht nur besonders mobil einsetzbar, sondern ebenso umweltfreundlich, so dass vorliegend in besonders vorteilhafter Art und Weise sowohl ein Verfahren zur Kühlung mit einem besonders hohen elektrischen Wirkungsgrad als auch einer besonders mobilen und variablen Einsetzbarkeit der Kälteanlage gewährleistet ist.

Gemäß zumindest einer Ausführungsform ist die Kälteanlage dazu ausgebildet, Blasformen zur Behälterherstellung der Behälterproduktionsanlage zu kühlen. In diesem Fall können die Blasformen als die Bauelemente identifiziert werden. Blasformen werden, insbesondere während des Ausformungs- und Blasformungsprozesses, oftmals sehr hohen Hitzequellen ausgesetzt, wodurch sich die Blasformen, beispielsweise während des Blasformungsprozesses, in unerwünschter Weise, besonders bei besonders kurzen Taktzeiten und hohen Durchlaufgeschwindigkeiten erwärmen. Die Erwärmung kann so weit gehen, dass die Blasformen, insbesondere das Material, mit dem die Blasformen gebildet sind, Materialschädigungen und/oder strukturelle Veränderungen, beispielsweise unerwünschte Verformungen, davontragen. Durch eine ungenügende Temperierung bzw. Kühlung der Blasformen kann auch die Qualität der in diesen Blasformen hergestellten Behälter nicht sichergestellt werden. Vorteilhaft kann mittels der hier beschriebenen Kälteanlage es vermieden werden, dass die Blasformen in derart unerwünschter Weise sich zu stark erhitzen.

Gemäß zumindest einer Ausführungsform dient zur Wärmeübertragung von den Blasformen auf das Arbeitsfluid der Kälteanlage die Umgebungsluft. Dies bietet den Vorteil, dass über eine beispielsweise räumlich nahe Anordnung der Blasformen zu Fluidleitungen der Kälteanlage durch die Wärmeübertragung mittels der Luft in besonders einfacher Art und Weise ein Wärmeaustausch ermöglicht wird ohne dass die Kälteanlage durch besondere mechanische Konstruktionen zur Wärmeübertragung mit den Blasformen verbunden werden müsste.

Gemäß zumindest einer Ausführungsform stehen zur Wärmeübertragung von den Blasformen die Blasformen in direktem Kontakt mit Fluidleitungen der Kälteanlage, wobei über den direkten Kontakt über die Fluidleitungen die Wärme von den Blasformen auf die Fluidleitungen der Kälteanlage übertragen wird. "Direkter Kontakt" kann heißen, dass die Blasformen zumindest stellenweise an die Fluidleitungen angeformt sind oder zwischen den Blasformen und den Fluidleitungen zumindest eine Zwischenschicht zur verbesserten Wärmeübertragung angeordnet ist. Jedenfalls ist in dieser Ausgestaltung zur Wärmeübertragung auf einen Luftspalt verzichtet. In einer derartigen Ausgestaltung der Kälteanlage ist sichergestellt, dass die Blasformen durch den stetigen Fluidaustausch innerhalb der Fluidleitungen und den direkten Kontakt der Fluidleitungen mit den Blasformen die Blasformen selbst besonders effizient und schnell gekühlt werden können. Insofern sind besonders schnelle Taktraten und Durchlaufgeschwindigkeiten möglich, so dass auch bei einer derartigen starken Belastung innerhalb des Blasformprozesses und/oder des Getränkeherstellungsprozesses die Blasformen stets unterhalb einer kritischen Temperatur bleiben. Die kritische Temperatur ist hierbei diejenige Temperatur, ab welcher die Blasformen für die Blasformen charakteristische Arbeitsparameter verlassen. Bei den Arbeitsparametern kann es sich beispielsweise um eine Grenztemperatur oder um eine minimale Materialsteifigkeit handeln.

Gemäß zumindest einer Ausführungsform werden die Blasformen der Behälterproduktionsanlage vor, während und/oder nach einem Blasprozess innerhalb der Behälterproduktionsanlage mittels der Kälteanlage gekühlt. Insofern ist eine besonders individuelle Kühlung, insbesondere in zeitlicher Hinsicht, gewährleistet. Denkbar ist nämlich, dass je nach Taktgeschwindigkeit und Durchlaufraten eine Kühlung der Blasformen, beispielsweise mittels der vorwegbeschriebenen Fluidleitung, eingestellt werden kann. Denkbar ist, dass bei besonders hohen Taktraten und einer zu erwartenden hohen Hitzeentwicklung die Blasformen bereits unter eine Vorblastemperatur herunter gekühlt werden, um sozusagen präventiv bereits eine Überhitzung, zumindest zeitlich, zu verzögern.

Gemäß zumindest einer Ausführungsform ist das Arbeitsfluid Wasser und das verdampfte Arbeitsfluid Wasserdampf, bei der ein Druck in dem Verdampfer in einem Kälteanlagenbetrieb kleiner als 50 mbar ist und bei der ein Druck in dem Gasbereich in einem Kälteanlagenbetrieb kleiner als 200 mbar ist. Es hat sich herausgestellt, dass ein Wirkungsgrad der gesamten Kälteanlage bei derartigen Druckverhältnissen mit Wasser als Arbeitsfluid am größten ist. Insbesondere ist Wasser als Arbeitsfluid besonders umweltfreundlich und nicht nur kostengünstig in die Kälteanlage einfüllbar, sondern durch dessen physikalische Eigenschaften besonders geeignet, um zudem einen Wirkungsgrad, insbesondere einen elektrischen Wirkungsgrad, der gesamten Kälteanlage möglichst zu maximieren.

Gemäß zumindest einer Ausführungsform umfasst die Kälteanlage ferner einen Kompressor, wobei der Kompressor zwischen dem Verdampfer und dem Verflüssiger angeordnet ist, wobei der Kompressor ausgebildet ist, um verdampftes Arbeitsfluid zu komprimieren und das komprimierte Arbeitsfluid in einen Teil des Gasbereichs einzuspeisen, der einen höheren Druck als der Verdampfer in einem Betrieb der Kälteanlage hat. Insbesondere kann der Verflüssiger in einer Betriebs-Aufstellrichtung der Kälteanlage oberhalb des Verdampfers angeordnet sein. Obgleich damit die Komponente mit größerem Gewicht, also der Verflüssiger, in dem verflüssigtes Arbeitsfluid vorhanden ist, oberhalb der Komponente angeordnet ist, die ein geringeres Gewicht hat, da in dem Verdampfer lediglich verdampftes Arbeitsfluid mit geringem Gewicht enthalten ist, ist diese Anordnung vorteilhaft.

Ein Vorteil besteht darin, dass der Transport des verdampften Arbeitsfluides von unten nach oben energieeffizient durchgeführt werden kann, da das Arbeitsfluid in verdampfter Form weniger Gewicht hat, so dass auch weniger Energie benötigt wird, damit dieses geringe Gewicht die Höhendifferenz vom Verdampferausgang zum Verflüssigereingang überwindet.

Gemäß zumindest einer Ausführungsform wird eine Kühlung mittels zumindest zwei Kälteanlagen gemäß zumindest einer der vorhergehenden Ausführungsformen unternommen, wobei die zumindest zwei Kälteanlagen zur Drucksteigerung in Form einer Kaskade hintereinandergeschaltet sind. Insbesondere können die beiden Kälteanlagen in der Behälterproduktionsanlage und/oder der Getränkeabfüllmaschine vollständig integriert sein. Insofern ist eine Kälteanlagenvorrichtung realisiert, umfassend die zumindest zwei Kälteanlagen, so dass unter anderem in einer derartigen Ausgestaltung in Form der hier beschriebenen Kaskade die gesamte Kälteanlagenvorrichtung besonders kompakt und kostengünstig in der Blasformmaschine und/oder der Getränkeabfüllmaschine integriert ist. Sind nun die beiden Kälteanlagen in Form einer Kaskade hintereinandergeschaltet, so ist denkbar, dass ein Abwärmeausgang einer ersten Kälteanlage in Reihe mittels eines Zwischenkreises vor einem Eingang der zweiten Kälteanlage geschaltet ist, so dass mittels eines innerhalb der ersten Kälteanlage eingebauten Verdichters, beispielsweise in Form eines Kompressors, ein erster erhöhter Druck bereits in den Eingang der zweiten Kälteanlage zur weiteren Druckerhöhung und einer damit einhergehenden Temperaturerhöhung eingeleitet wird. Insofern ist eine besonders individuelle Einstellung einer Ausgangstemperatur und/oder eines Ausgangsdruckes mittels einer beispielsweise beliebigen und besonders individuellen Hintereinanderschaltung in Form einer Kaskade von einer vorgegebenen oder vorgebbaren Anzahl von Kälteanlagen ermöglicht.

Gemäß zumindest einer Ausführungsform wird die Kühlung mittels zumindest zwei Kälteanlagen gemäß zumindest einem der vorhergehenden Ausführungsform unternommen, wobei die zumindest zwei Kälteanlagen zur Leistungssteigerung parallel nebeneinander geschaltet sind. Bei einer derartigen Ausführungsform haben die Abwärmeausgänge beider Kälteanlagen einen gemeinsamen Endpunkt und werden beispielsweise in einer gemeinsamen Fluidgasleitung und/oder Fluidleitung zusammengeführt. Insbesondere ist eine derartige Parallelschaltung, beispielsweise in Form einer entsprechenden "Parallelschaltung in der Elektrotechnik", realisiert.

Grundsätzlich ist zudem eine Mischform aus einer kaskadischen und einer Parallelanordnung denkbar. Dazu ist denkbar, dass zunächst beispielsweise zwei oder mehr Kälteanlagen zur Leistungssteigerung zunächst parallel geschaltet sind und gemeinsam in einen Eingang einer hinter einer derartigen Parallelschaltung der Kälteanlagen geschaltete weitere Kälteanlage zusammengeführt werden und zusammenfließen. Insofern ist also auch jede beliebige Form einer Mischform umfassend eine Parallelschaltung von Kälteanlagen und einer sequenziell darauf folgenden kaskadischen Anordnung zumindest einer weiteren Kälteanlage mit der Parallelschaltung oder umgekehrt ermöglicht, so dass insbesondere zur individuellen Druck- und Leistungseinstellung der Kälteanlage und damit der gesamten Kälteanlageneinrichtung eine besonders effiziente Möglichkeit einer Steigerung des elektrischen Wirkungsgrades bei einer grundsätzlichen Umweltfreundlichkeit der gesamten Kälteanlage ermöglicht ist.

Es wird darüber hinaus eine Kälteanlage zur Kühlung von sich während eines Blasformprozesses und/oder eines Getränkeherstellungsprozesses erwärmenden Bauelementen angegeben. Beispielsweise kann mittels der hier beschriebenen Kälteanlage ein Verfahren, wie es in Verbindung mit einer oder mehreren der oben genannten Ausführungsformen beschrieben ist, durchgeführt werden. Das heißt, die für das hier beschriebene Verfahren aufgeführten Merkmale sind auch für die hier beschriebene Kälteanlage offenbart und umgekehrt. Insbesondere kann die hier beschriebene Kälteanlage in einer Behälterproduktionsanlage oder einer Getränkeabfüllmaschine verbaut und beispielsweise integriert sein.

Gemäß zumindest einer Ausführungsform werden zur Kühlung von sich während eines Blasformprozesses und/oder eines Getränkeherstellungsprozesses erwärmenden Bauelementen einer Behälterproduktionsanlage und/oder einer Getränkeabfüllmaschine diese Bauelemente mittels zumindest einer Kälteanlage gekühlt, wobei die Kälteanlage mit einem Verdampfer, einem Verflüssiger und einem Gasbereich, der sich zwischen dem Verdampfer und Verflüssiger erstreckt und ausgebildet ist, um von dem Verdampfer verdampftes Arbeitsfluid zu dem Verflüssiger zu leiten, gebildet ist, sodass das verdampfte Arbeitsfluid in dem Verflüssiger verflüssigt wird. Dabei ist das Arbeitsfluid ein umweltfreundliches Fluid, welches in eine Umgebung der Blasformmaschine und/oder der Getränkeabfüllmaschine ohne eine Verursachung von Umweltschädigungen abgebbar ist.

Dabei weist die hier beschriebene Kälteanlage dieselben Vorteile wie im Zusammenhang mit dem hier beschriebenen Verfahren auf.

Im Folgenden wird das hier beschriebene Verfahren sowie die hier beschriebene Kälteanlage anhand von Ausführungsbeispielen und den dazugehörigen Figuren näher erläutert.
- Fig. 1A - 1C: Ausführungsbeispiele in schematischen Seitenansichten einer hier beschriebenen Kälteanlage; und
- Fig. 2: Ausführungsbeispiel einer hier beschriebenen Getränkeproduktionsanlage, umfassend die hier beschriebene Kälteanlage zur Kühlung von Bauelementen mittels des hier beschriebenen Verfahrens.

In den Ausführungsbeispielen und den Figuren sind gleiche oder gleichwirkende Bestandteile jeweils mit den gleichen Bezugszeichen versehen. Die hier dargestellten Elemente sind nicht als maßstabsgerecht anzusehen, vielmehr können einzelne Elemente zum besseren Verständnis übertrieben groß dargestellt sein.

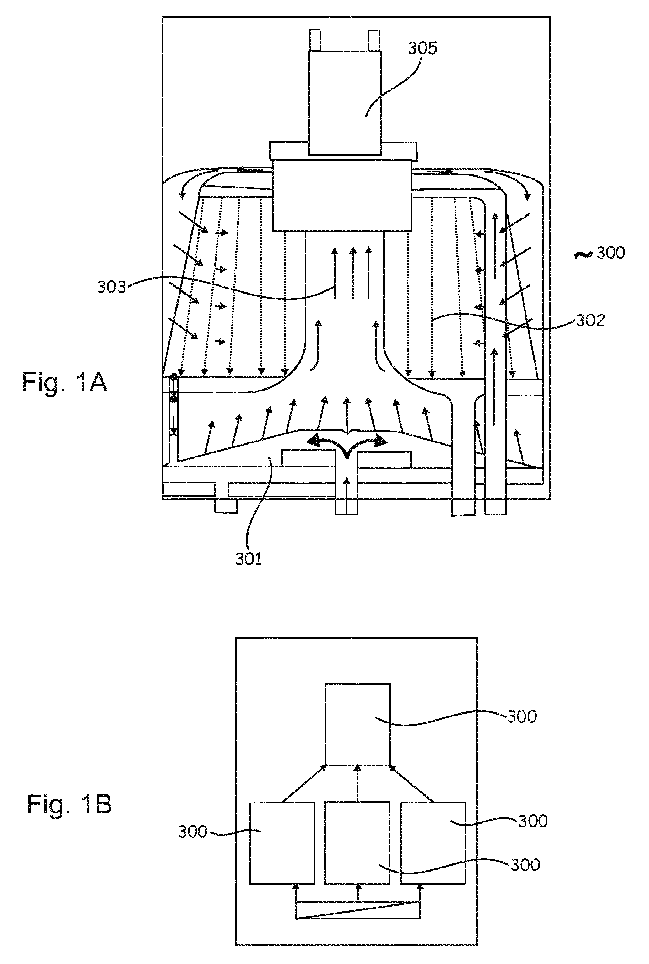

In der Fig. 1A ist in einer schematischen Seitenansicht ein erstes Ausführungsbeispiel einer hier beschriebenen Kälteanlage 300 gezeigt. Erkennbar ist, dass die Kälteanlage 300 mit einem Verdampfer 301, einem Verflüssiger 302 und einem Gasbereich 303, der sich zwischen dem Verdampfer 301 und dem Verflüssiger 302 erstreckt und ausgebildet ist, um von dem Verdampfer 301 verdampftes Arbeitsfluid zu dem Verflüssiger 302 zu leiten, so dass das verdampfte Arbeitsfluid in dem Verflüssiger 302 verflüssigt wird. Insbesondere ist aus der Fig. 1A erkennbar, dass das durch oder im Bereich des Verdampfers 301 hindurchgeleitete vorliegende Arbeitsfluid, welches Wasser ist, zunächst verdampft wird und in Pfeilrichtung aufsteigt zu dem in vertikaler Richtung, das heißt in der Maschinenaufstelleinrichtung über dem Verdampfer 301 angeordneten Verflüssiger 302, aufsteigt und dort mittels eines Kompressors 305, welcher zwischen dem Verdampfer 301 und dem Verflüssiger 302 angeordnet ist, unter Druck gesetzt wird und dann innerhalb des Verflüssigers 302 wieder zu Wasser rückverflüssigt wird, so dass ein vollständiger und vorzugsweise in sich geschlossener Kühlkreislauf erhalten ist.

In der Fig. 1B ist ein schematisches Schaltbild gezeigt, bei dem vorliegend drei Kälteanlagen 300 zunächst parallel zueinander zur Leistungssteigerung geschaltet sind und diese drei Kälteanlagen 300 anschließend mit einer weiteren Kälteanlage 300 in einer Kaskadenschaltung hintereinander geschaltet sind, um neben einer erhöhten Leistungssteigerung zudem eine höhere Drucksteigerung und damit eine höhere Leistungseffizienz, das heißt einen erhöhten Wirkungsgrad der gesamten Kälteanlagenvorrichtung der Figur 1B zu erreichen.

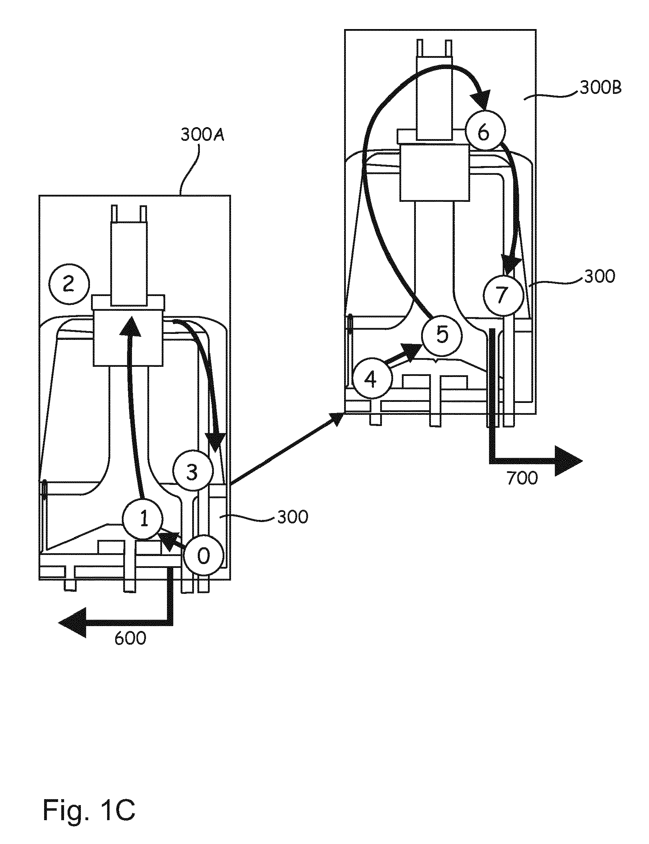

In der Fig. 1C ist in einer schematisch perspektivischen Ansicht eine Kaskadenschaltung zweier Kälteanlagen 300 und dem zwischen den beiden Kälteanlagen 300 dargestellten Fluidkreislauf dargestellt, wobei bei der ersten Kälteanlage 300A Kühlkälte 600, beispielsweise Wasser bei einer Temperatur von höchstens 20°C, zum Beispiel etwa 15°C ausgeleitet wird und aus der zweiten Kühlanlage 300B Abwärme 700 , das heißt erwärmtes Wasser ausgeleitet wird. Insbesondere kann die Kühlkälte dazu Verwendung finden, die Bauelemente 1, also beispielsweise die Blasformen 101, zu kühlen.

Beispielhaft ist in der Fig. 1C dargestellt, wie zwischen den Schritten 0 nach 1 Wasser bei 17 mbar und 15° verdampft.

Im Weiteren ist zwischen den Schritten 1 und 2 gezeigt, wie ein Turboverdichter mit einem Druckverhältnis P₁/P₂ = 3 den Druck des Wasserdampfs von beispielsweise 17 mbar auf beispielsweise 51 mbar erhöht.

Zwischen den Schritten 2 und 3 ist gezeigt, wie eine Kondensation in einer ersten Stufe bei ca. 32°C stattfindet, wobei zwischen den Schritten 3 und 4 eine Kaskadenschaltung realisiert ist, bei der mittels eines Zwischenkreises zwischen der ersten Stufe in Form der ersten Kälteanlage 300 und der zweiten Stufe in Form der zweiten Kälteanlage 300 ein Wärmeaustausch bei ca. 30°C stattfindet. Angekommen in der zweiten Stufe, das heißt der zweiten Kälteanlage 300B, wird in der zweiten Stufe ein Verdampfer das auf ca. 30°C erhitzte Wasser auf 32°C erhöhen, wobei wiederum zwischen den Schritten 5 und 6 innerhalb der zweiten Kälteanlage 300B ein weiterer Turboverdichter in Form einer zweiten Stufe mit einem Druckverhältnis P₃/P₄ = 3 den Druck des Wasserdampfs von 37 mbar auf maximal 110 mbar erhöht und zwischen den Schritten 6 und 7 eine Kondensation des Wasserdampfes auf eine Sättigungstemperatur von etwa 46°C stattfindet und als Abwärme 700 aus der gesamten Kälteanlagenvorrichtung abgegeben wird. Insofern ist mittels der Fig. 1C beispielhaft beschriebenen Kaskadenschaltung eine besonders effiziente Erhöhung der Drucksteigerung von anfänglich beispielsweise 17 mbar auf beispielsweise 110 mbar realisierbar.

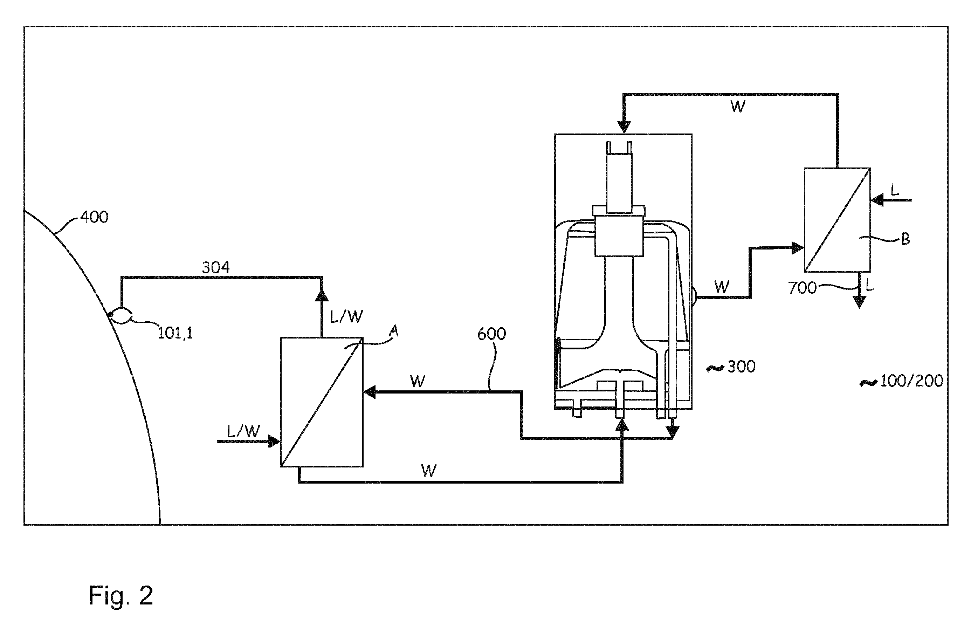

In der Fig. 2 ist anhand einer schematischen Seitenansicht ein Ausführungsbeispiel einer hier beschriebenen Behälterproduktionsanlage 100 umfassend die hier beschriebene Kälteanlage 300 sowie eine Haltevorrichtung 400 gezeigt, an der mechanisch fest die Blasformen 101 befestigt sind. Dabei ist erkennbar, dass die Kälteanlage 300 über Fluidleitungen 304, welche in direktem Kontakt mit den Blasformen 101 stehen, in unmittelbarem Wärmeaustauschkontakt stehen und die Kühlkälte 600 zu den Blasformen 101 transportieren, sodass eine besonders effiziente Kühlung mittels des Arbeitsfluides, welches vorliegend wiederum ein Wasser ist, ermöglicht wird. Zudem steht ein Tank A in Wärmeaustauschkontakt mit der Umgebungsluft, welche zusätzlich Wärme von den Blasformen 101 zu dem Tank A überträgt. Dabei ist erkennbar, dass die Blasformen 101, welche vorliegend als die Wärmequellen zu identifizieren sind, die Wassertemperatur in einem Tank A von zunächst 15° auf 21° erhöhen und dieses dann in einen Eingang der Kälteanlage 300 eingeleitet wird, um dann darin zu verdampfen und in Form von Wasser bei einer Temperatur von 46°C in einen zweiten Tank B eingeleitet zu werden. Der zweite Tank B kann in Form einer Wärmesenke ausgeführt sein und beispielsweise ein Bereich sein, welcher außerhalb oder an einer Außenfläche der gesamten Behälterproduktionsanlage 100 angeordnet ist. Insbesondere kann ein derartiger Tank B zum Beheizen von Räumen unter Verwendung der Abwärme 700 wiederverwendet werden. Dabei steht das Bezugszeichen "W" für Wasser und das Bezugszeichen "L" für Luft. Entsprechend kann die hier beschriebene Kälteanlage 300 auch innerhalb einer Getränkeabfüllmaschine 200 vollständig integriert sein, so dass in der Fig. 2 in besonders einfacher Art und Weise eine ganz besonders kompakte und kostengünstige Methode einer umweltfreundlichen Kühlung von Bauelementen 1 einer Behälterproduktionsanlage 100 und/oder einer Getränkeabfüllmaschine 200 angegeben ist.

Die Erfindung ist nicht durch die Beschreibung und die Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder in den Ausführungsbeispielen angegeben ist.

### Bezugszeichenliste

- 1: Bauelemente
- 100: Behälterproduktionsanlage
- 101: Blasformen
- 200: Getränkeabfüllmaschine
- 300: Kälteanlage
- 301: Verdampfer
- 302: Verflüssiger
- 303: Gasbereich
- 304: Fluidleitungen
- 305: Kompressor
- 400: Haltevorrichtung
- 600: Kühlkälte
- 700: Abwärme

- A: erster Tank
- B: zweiter Tank
- W: Wasser
- L: Luft

## Patentansprüche

1. Verfahren zur Kühlung von sich während eines Blasformprozesses und/oder eines Getränkeherstellungsprozesses erwärmenden Bauelementen (1) einer Behälterproduktionsanlage (100) und/oder einer Getränkeabfüllmaschine (200) mittels zumindest einer Kälteanlage (300), wobei die Kälteanlage (300) mit einem Verdampfer (301), einem Verflüssiger (302), und einem Gasbereich (303), der sich zwischen dem Verdampfer (301) und dem Verflüssiger (302) erstreckt und ausgebildet ist, gebildet ist, um von dem Verdampfer (301) verdampftes Arbeitsfluid zu dem Verflüssiger (302) zu leiten, so dass das verdampfte Arbeitsfluid in dem Verflüssiger (302) verflüssigt wird,
**dadurch gekennzeichnet, dass**
das Arbeitsfluid ein umweltfreundliches Fluid ist, welches in eine Umgebung der Blasformmaschine und/oder der Getränkeabfüllmaschine ohne eine Verursachung von Umweltschädigungen abgebbar ist.

2. Verfahren zur Kühlung nach Anspruch 1,
**dadurch gekennzeichnet, dass**
das verdampfte Arbeitsfluid frei von Fluorkohlenwasserstoffen (FCKW) ist.

3. Verfahren zur Kühlung nach zumindest einem der vorhergehenden Ansprüche,
**dadurch gekennzeichnet, dass**
die Kälteanlage (300) in die Behälterproduktionsanlage (100) und/oder die Getränkeabfüllmaschine (200) vollständig integriert ist.

4. Verfahren zur Kühlung nach zumindest einem der vorhergehenden Ansprüche,
**dadurch gekennzeichnet, dass**
die Kälteanlage (300) dazu ausgebildet ist, Blasformen (101) zur Behälterherstellung der Behälterproduktionsanlage (100) zu kühlen.

5. Verfahren zur Kühlung nach zumindest einem der vorhergehenden Ansprüche,
**dadurch gekennzeichnet, dass**
zur Wärmeübertragung von den Blasformen (101) auf das Arbeitsfluid der Kälteanlage (300) die Umgebungsluft der Blasformen (101) dient.

6. Verfahren zur Kühlung nach Anspruch 4,
**dadurch gekennzeichnet, dass**
zur Wärmeübertragung von den Blasformen (101) die Blasformen (101) in direktem Kontakt mit Fluidleitungen (304) der Kälteanlage (300) stehen, wobei über den direkten Kontakt über die Fluidleitungen (304) die Wärme von den Blasformen (101) auf die Fluidleitungen (305) der Kälteanlage (300) übertragen werden.

7. Verfahren zur Kühlung nach zumindest einem der vorhergehenden Ansprüche,
**dadurch gekennzeichnet, dass**
Blasformen (101) der Behälterproduktionsanlage (100) vor, während und/oder nach einem Blasprozesses innerhalb der Behälterproduktionsanlage (100) mittels der Kälteanlage (300) gekühlt werden.

8. Verfahren zur Kühlung nach zumindest einem der vorhergehenden Ansprüche,
**dadurch gekennzeichnet, dass**
das Arbeitsfluid Wasser ist und das verdampfte Arbeitsfluid Wasserdampf ist, bei dem ein Druck in dem Verdampfer in einem Kälteanlagenbetrieb kleiner als 50 mbar ist, und bei dem ein Druck in dem Gasbereich in einem Kälteanlagenbetrieb kleiner als 200 mbar ist.

9. Verfahren zur Kühlung nach zumindest einem der vorhergehenden Ansprüche,
**dadurch gekennzeichnet, dass**
die Kälteanlage (300) ferner einen Kompressor (305) umfasst, wobei der Kompressor (305) zwischen dem Verdampfer (301) und dem Verflüssiger (302) angeordnet ist, wobei der Kompressor (305) ausgebildet ist, um verdampftes Arbeitsfluid zu komprimieren und das komprimierte Arbeitsfluid in einen Teil des Gasbereichs einzuspeisen, der einen höheren Druck als der Verdampfer (301) in einem Betrieb der Kälteanlage (300) hat.

10. Verfahren zur Kühlung nach zumindest einem der vorhergehenden Ansprüche,
**dadurch gekennzeichnet, dass**
eine Kühlung mittels zumindest zwei Kälteanlagen (300) gemäß zumindest einem der Ansprüche 1 bis 9 unternommen wird, wobei die zumindest zwei Kälteanlagen (300) zur Drucksteigerung in Form einer Kaskade hintereinander geschaltet sind.

11. Verfahren zur Kühlung nach zumindest einem der vorhergehenden Ansprüche,
**dadurch gekennzeichnet, dass**
eine Kühlung mittels zumindest zwei Kälteanlagen (300) gemäß zumindest einem der Ansprüche 1 bis 9 unternommen wird, wobei die zumindest zwei Kälteanlagen (300) zur Leistungssteigerung parallel nebeneinander geschaltet sind.

12. Kälteanlage (300) zur Kühlung von sich während eines Blasformprozesses und/oder eines Getränkeherstellungsprozesses erwärmenden Bauelementen (1) einer Behälterproduktionsanlage (100) und/oder einer Getränkeabfüllmaschine (200) mittels zumindest einer Kälteanlage (200), wobei die Kälteanlage (300) mit einem Verdampfer (301), einem Verflüssiger (302), und einem Gasbereich (303), der sich zwischen dem Verdampfer (301) und dem Verflüssiger (302) erstreckt und ausgebildet ist, gebildet ist, um von dem Verdampfer (301) verdampftes Arbeitsfluid zu dem Verflüssiger (302) zu leiten, so dass das verdampfte Arbeitsfluid in dem Verflüssiger (302) verflüssigt wird,
**dadurch gekennzeichnet, dass**
das Arbeitsfluid ein umweltfreundliches Fluid ist, welche in eine Umgebung der Blasformmaschine und/oder der Getränkeabfüllmaschine ohne eine Verursachung von Umweltschädigungen abgebbar ist.

13. Behälterproduktionsanlage (100) umfassend zumindest eine Kälteanlage (300) nach Anspruch 12 zum Kühlen von Bauelementen (1) der Behälterproduktionsanlage (100).

14. Getränkeabfüllmaschine (200) umfassend zumindest eine Kälteanlage (300) nach Anspruch 13 zum Kühlen von Bauelementen (1) der Getränkeabfüllmaschine (200).
